(19) **Europäisches Patentamt / European Patent Office / Office européen des brevets**

(11) **EP 1 836 227 B1**

(12) **EUROPEAN PATENT SPECIFICATION**

(45) Date of publication and mention of the grant of the patent:
**19.05.2010 Bulletin 2010/20**

(51) Int Cl.:
*C08B 15/00* (2006.01)  *C08B 11/20* (2006.01)
*C08J 3/24* (2006.01)

(21) Application number: **05850918.3**

(22) Date of filing: **28.12.2005**

(86) International application number:
**PCT/IB2005/054412**

(87) International publication number:
**WO 2006/070337 (06.07.2006 Gazette 2006/27)**

(54) **BIODEGRADABLE, SUPER ABSORBENT POLYMER HYDROGELS AND A METHOD FOR THEIR PREPARATION**

BIOLOGISCH ABBAUBARE, SUPERABSORBENTE POLYMERE HYDROGELE UND VERFAHREN ZU DEREN HERSTELLUNG

HYDROGELS POLYMERES BIODEGRADABLES, SUPERABSORBANTS ET LEUR PROCEDE DE PREPARATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.12.2004 IT TO20040918**

(43) Date of publication of application:
**26.09.2007 Bulletin 2007/39**

(73) Proprietors:
- **Ambrosio, Luigi**
  **80044 Ottaviano (NA) (IT)**
- **Nicolais, Luigi**
  **80056 Ercoland (IT)**
- **Sannino, Alessandro**
  **73100 Lecce (IT)**

(72) Inventors:
- **Ambrosio, Luigi**
  **80044 Ottaviano (NA) (IT)**

- **Nicolais, Luigi**
  **80056 Ercoland (IT)**
- **Sannino, Alessandro**
  **73100 Lecce (IT)**

(74) Representative: **Chapman, Paul William**
  **Kilburn & Strode LLP**
  **20 Red Lion Street**
  **London**
  **WC1R 4PJ (GB)**

(56) References cited:
**WO-A-01/95875     US-A- 5 017 229**

- **F. ESPOSITO ET AL.: "Water sorption in cellulose-based hydrogels" JOURNAL OF APPLIED POLYMER SCIENCE, JOHN WILEY AND SONS INC. NEW YORK, US, vol. 60, 1996, pages 2403-2407, XP002406557 ISSN: 0021-8995 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to biodegradable, superabsorbent polymer hydrogels and a method for their preparation.

Polymer hydrogels are materials composed of a solid polymer lattice and an interstitial aqueous phase. In particular, hydrogels capable of absorbing a quantity of water in excess of 95% of their overall weight are defined as "superabsorbent". Certain of such materials are even capable of absorbing over 1 litre of water per gram of dry polymer.

The crosslinks, *i.e.* the physical or chemical bonds between the macromolecular chains constituting the hydrogel lattice, guarantee the structural integrity of the polymer-liquid system, on the one hand impeding the complete solubilisation of the polymer, and on the other hand allowing the retention of the aqueous phase within the molecular mesh.

The superabsorbent hydrogels currently available are

characterised by not only their marked absorbent properties, but also by their biocompatibility, probably due to the high water content, and above all by the possibility of adjusting their absorption capacity in relation to external stimulii. Consequently, such hydrogels may be used as intelligent materials, for example for the manufacture of sensors or actuators for various industrial applications. Along with the traditional applications as absorbent cores within the personal hygiene absorbent product sector, are included more recent and innovative applications in fields such as for example the biomedical sector, for the development of controlled release drugs, artificial muscles, sensors, etc., and in agriculture and horticulture, for example, in devices for the controlled release of water and nutrients in arid soils.

However, the superabsorbent hydrogels currently available are almost exclusively acrylic-based products, and hence not biodegradable.

Given the growing interest in environmental protection issues, over recent years, a vast amount of interest has been focussed on the development of biodegradable polymer-based superabsorbent materials, having similar properties to those of the traditional superabsorbent polyacrylics.

Examples of biodegradable polymers used to obtain superabsorbent hydrogels include starch and cellulose derivatives.

In 1990 Anbergen and Oppermann [1] proposed a method for the synthesis of a superabsorbent material constituted entirely of cellulose derivatives. Particularly, they used hydroxyethylcellulose (HEC) and a carboxymethylcellulose sodium salt (CMCNa), chemically crosslinked with divinylsulphone in a basic solution. However, the absorption capacities of such materials are not very high, if compared with those of the acrylic-based superabsorbent materials currently on the market.

In 1996 Esposito and co-workers [2], by starting from the synthetic process proposed by Anbergen and Opperman, developed a method for increasing the absorption capacity of the gel, by acting principally on the physical properties of the material. The basic idea is that of inducing microporosity into the polymer structure, so as to promote the absorption and retention of water by capillarity. Said microporosity has been induced during the drying stage, carried out by phase inversion in a nonsolvent for the polymer, and the absorption capacity of the material thus obtained has been compared to that of the material obtained by air-drying. The absorption capacity, in distilled water, of the gel dried by phase inversion, as envisaged, has been markedly superior with respect to that of the air-dried gel.

CMCNa may be chemically crosslinked with all those reagents which are bifunctional with respect to cellulose: besides the divinylsulphone used in the synthetic process according to Anbergen and Opperman, the use of epichlorhydrin, formaldehyde and various diepoxides is known, all compounds which are highly toxic in their unreacted states [3].

Instead, certain carbodiimide are known among the unconventional crosslinking agents. Particularly, the use of carbodiimides for crosslinking salified or non-salified carboxymethylcellulose (CMC) has been described [4]. Carbodiimides induce the formation of ester bonds between cellulose macromolecules, without participating in the bonds themselves, but simply transforming themselves into a very low toxicity urea derivative [5].

For a more detailed explanation of the complex reaction mechanism between carbodiimides and the carboxylic groups of various polysaccharides, please refer to the work by Nakajima and Ikada [6].

In reality, the product obtained from the carbodiimide-mediated crosslinking of CMCNa in aqueous solution has the appearance of a "gelatin" with more or less greater viscosity, depending on the specific carbodiimide used [4,7].

Furthermore, its absorption capacity in water is relatively low, equal to around 50 times the weight of the polymer in the dry state. Gels of the type described above, based on carboxymethylcellulose and other polysaccharides, particularly hyaluronic acid, produced in the form of films and generally used in medicine as fillers for the prevention of post-surgical adhesions between tissues, are currently available on the market[7]. Films are obtained by simple casting of the gelatinous solution obtained following crosslinking, followed by air drying.

In the light of the above, it is obvious that the hydrogels currently available, despite having the advantage of being biodegradable, are not capable of competing with the traditional superabsorbent polyacrylics, both due to their low swelling capacity and due to their poor mechanical properties in the swollen state.

Hence the present invention has the aim of providing superabsorbent hydrogels with optimal absorption capacities and optimal mechanical properties in the swollen state, comparable with those of the polyacrylic hydrogels currently available, while at the same time being biodegradable and non-toxic for the environment and towards humans.

This aim is achieved by means of the method for preparing a superabsorbent hydrogel as defined in the appended claims, and by means of the superabsorbent hydrogel obtainable using said method.

The preparation method of the invention involves, in a first step, the crosslinking of an aqueous solution of sodium carboxymethylcellulose and hydroxyethylcellulose with carbodiimide as a crosslinking agent in the presence of an acid catalyst, the total concentration of sodium carboxymethylcellulose and hydroxyethylcellulose in said aqueous solution being at least 3% by weight in relation to the weight of water, and the carbodiimide concentration in said aqueous solution being at least 5% by weight in relation to the weight of water. Said first step is preferably carried out at room temperature and at atmospheric pressure.

In a second step, the gel obtained is purified by washing in distilled water and, in a third step, it is dried by phase inversion in a non-solvent for cellulose.

The precursors used for the formation of the polymer lattice, are hence a sodium salt of carboxymethylcellulose (CMCNa) and hydroxyethylcellulose (HEC). Said precursors are crosslinked by means of a carbodiimide. The above indicated concentrations of CMCNa+HEC on the one hand, and carbodiimide on the other, are the optimal concentrations, in that it has been shown experimentally that lower concentrations either impede crosslinking or lead to the formation of a gel with very poor mechanical properties.

The hydrogel obtained from the crosslinking step of the method of the invention, is a biodegradable chemical gel. A gel is defined as chemical when the network is stabilised by strong covalent bonds, formed either directly between reactive groups belonging to the macromolecules constituting the network, or by means of polyfunctional molecules, designated as crosslinkers, which are capable of binding several polymer chains. Hence, chemical gels are characterised by good chemical and mechanical stability, in comparison with physical gels, where crosslinking occurs by means of secondary bonds, such as for example Wan der Waals interactions, ionic interactions or simple physical entanglements between macromolecules.

Generally, the absorbent capacity of the lattice - which principally depends on the degree of hydrophilicity of the polymer and the number of crosslinks per unit of volume - is particularly enhanced by the presence of ionic or ionisable groups anchored to the macromolecular chains: in this case, absorption is promoted both by the expansion of the polymer network, due to the effects of electrostatic repulsion between identical charges, and by the charge imbalance created between the interior and exterior of the gel, as a result of which further water is absorbed due to the "Donnan effect".

In the superabsorbent hydrogels obtained using the method of the invention, the carboxymethylcellulose sodium salt is the so-called polyelectrolyte species. Indeed, the presence of the carboxyl functional group allows the formation of a negative ion if said group undergoes a basic hydrolysis.

Hydroxyethylcellulose is used to stabilise the polymer network. Indeed, carboxymethylcellulose alone tends to form intramolecular rather than intermolecular crosslinks, leading to the formation of a weak gel, *i.e.* a gel with poor mechanical properties. This occurs due to the charged groups anchored to the chains, which impede intermolecular contact due to electrostatic repulsion. Hydroxyethylcellulose, thanks to the reactivity of its hydroxyl groups, stabilises the three-dimensional network of the polymer, through its tendency to form intermolecular bonds.

A carbodiimide is used as a crosslinking agent. Carbodiimides are unconventional crosslinking agents, in that they do not bind directly to the cellulose molecules. The overall reaction scheme may be summarised in two steps. In the first step, in an acidic environment, the carbodiimide induces the formation of an intermolecular or intramolecular acid anhydride between two carboxymethylcellulose carboxyl groups, transforming itself into a urea derivative. In the second step, the acid anhydride reacts with a hydroxyl group, thus forming an ester bond which acts as a crosslink between the cellulose chains. It is important to point out that the urea derivative obtained as a by-product of the reaction has an extremely low level of cytotoxicity. Furthermore, from the points mentioned above, it is clear that in order for the carbodiimide to act as a cellulose crosslinking agent, it is essential that the pH of the solution be acidic, and preferably comprised of between 3.5 and 4.5. It is hence essential to carry out the crosslinking reaction in the presence of a suitable acid catalyst. Any aqueous acid solution, for example an aqueous citric acid solution, may be used as the acid catalyst.

The hydrogels obtained following the crosslinking reaction are then washed and dried.

The washing step allows the elimination of any impurities, unreacted compounds and urea produced by carbodiimide hydrolysis. Washing is performed by placing the gel in a polar organic solvent, such as for example methanol or water, in such a way that it swells, releasing everything that has not been incorporated into the polymer network. Water is the preferred polar organic solvent, and distilled water even more preferred. The volume of water required in this step in order to achieve the maximum degree of swelling of the gel is approx. 10-20 times the initial volume of the gel itself. Taking account of the enormous amounts of water which would be involved in this stage on the industrial scale, as well as the relevant disposal and/or recycling, the importance of having non-toxic precursors in the synthetic process, such as those used in the present invention, becomes clear.

The washing step may be repeated several times, optionally changing the polar organic solvent used.

For example, methanol may be used as the organic wash solvent, followed by distilled water.

The subsequent drying step is carried out using the technique of phase inversion, in a non-solvent for cellulose. A non-solvent for cellulose is any aromatic solvent, for example acetone. This technique allows the attainment of a microporous final structure, which improves the absorption capacity of the gel by capillarity. Furthermore, if the porosity is interconnected or open, *i.e.* if the micropores are in communication with one another, then the absorption/desorption kinetics of the gel are also improved. Immersing the completely swollen hydrogel in a non-solvent results in phase inversion with expulsion of water, until it precipitates as a vitreous solid in the form of white coloured granules. Various rinses in non-solvent may be necessary in order to obtain dried gel in a short period of time.

At the end of the process, further drying in air or an oven may be useful, in order to eliminate any residual traces of non-solvent. Hydrogels with further improved absorbent properties may be obtained, according to above described process, by the addition of a polyethylene glycol (PEG), of molecular weight varying between 800 to 1,000,000, to the initial polymer solution containing carboxymethylcellulose and hydroxyethylcellulose. The PEG macromolecule acts as a molecular spacer within the polymer network, thus increasing its absorption capacity.

The hydrogels that can be obtained using the method of the invention have significant advantages with respect to the polyacrylic hydrogels used to date in the consumer product sectors, such as absorbent products for personal hygiene (for example, baby's nappies, sanitary towels, etc.) and agriculture (for example, devices for the controlled release of water and nutrients). Such advantages are essentially associated with the biodegradability and the use of non-toxic precursors during manufacturing. The biocompatibility of the superabsorbent hydrogels forming the subject of the present invention additionally allow their application in the biomedical sector. The absorption capacity of such materials, associated with the amount of carboxymethylcellulose used, and improved through the induction of microporosity in the gel structure, is comparable with that of the polyacrylic gels, maintaining mechanical properties sufficient for all the above-mentioned applications.

Hence, the use of polymer hydrogels of the invention as absorbent materials in products adapted to absorbing water or aqueous solutions and/or adapted to reswelling when brought into contact with water and/or aqueous solutions, also fall within the scope of the present invention.

Particularly, the superabsorbent hydrogels of the present invention may find application as absorbent materials in the dietary supplement sector (for example, as bulking agents in supplements for hypocaloric diets, conferring a sensation of lasting satiety in the stomach for a limited amount of time, or in water and low molecular weight substance supplements, such as mineral salts, vitamins, or be included in drinks in dry or swollen form); in the agricultural product sector (for example, in devices for the controlled release of water and/or nutrients and/or phytochemicals, particularly for cultivation in arid, desert areas and in all cases where it is not possible to carry out frequent irrigation operations; such products, mixed in dry form into the soil in the areas surrounding the plant roots, absorb water during irrigation and are capable of retaining it, releasing it slowly together with any nutrients and phytochemicals useful for cultivation); in the personal hygiene absorbent product sector (for example, as core absorbent in baby's nappies, sanitary towels and the like); in the toy and gadget sector (for example, in products which alter their size significantly once brought into contact with water or aqueous solutions); and finally, in the biomedical sector (for example, in biomedical and/or medical devices such as absorbent dressings for the treatment of highly exudative wounds, such as ulcers and/or burns).

The above-mentioned products, including a superabsorbent hydrogel, obtained using the method of the invention, as absorbent material also fall within the scope of the invention.

The following examples are for the purposes of illustration of the invention, and should not be considered as limiting the scope of the same in any way.

EXAMPLES

Materials and methods

All the materials used have been supplied by Aldrich Italia and used without any further modifications.

The equipment used for characterisation, besides the normal laboratory glassware and the fume hoods and chemical workbenches for traditional synthesis, include a JEOL JSM-6500F scanning electron microscope (SEM), a Sartorius $10^{-5}$g precision balance, an Isco mixer, and an ARES model rheometer.

The cellulose gel has been prepared by crosslinking a carboxymethylcellulose sodium salt (CMCNa) with hydroxyethylcellulose (HEC) in aqueous solution, using 1-ethyl-3-(3-dimethylaminopropyl)carbodiimide (WSC) as the crosslinking agent.

The composition of a gel is given by the nominal amount of the reagents present in the starting solution. The parameters used to define said composition are the following:

(i) the concentration (%) of the polymer by weight = the mass of all the polymers in the solution (CMCNa + HEC) (g) x 100/mass of water (g);
(ii) the CMCNa to HEC weight ratio = mass of CMCNa (g) in solution/mass of HEC in solution (g); and
(iii) the concentration (%) of crosslinking agent (carbodiimide) by weight = mass of WSC in solution (g) x 100/mass of water (g).

Those skilled in the laboratory have shown that polymer concentrations of less than 3% and carbodiimide concentrations of less than 5% do not allow crosslinking, or lead to the attainment of a gel with very poor mechanical properties.

With CMCNa as the polyelectrolyte species, it is possible to obtain the desired absorption capacity by appropriately adjusting the carboxymethylcellulose sodium salt to hydroxyethylcellulose (CMCNa/HEC) weight ratio. It has been observed that a CMCNa/HEC weight ratio comprised within the range 0/1 to 5/1, preferably 1/1 to 3/1, allows in any case the attainment of hydrogels with optimal absorption capacity.

Three examples relating to the synthesis of three different hydrogels, differing from one another by the percentage weight of polymer and by the CMCNa/HEC weight ratio, are reported in the following. Instead, the concentration of carbodiimide by weight is equal for all 3 hydrogels, and is equal to 5%. The first (gel A) contains 3% polymer, with a CMCNa/HEC ratio equal to 1/1; the second (gel B) contains 3% polymer, with a CMCNa/HEC ratio equal to 3/1; the third (gel C) contains 5% polymer, with a CMCNa/HEC ratio equal to 1/1. Hence, gels A and C differ from one another in the quantity of polymer, while gels A and B differ in the CMCNa/HEC ratio.

Preparation of gel A

The polymer solution has been prepared by adding 0.6 g of carboxymethylcellulose sodium salt (CMCNa) and 0.6 g of hydroxyethylcellulose (HEC) to 40 ml of distilled water. The preparation has been mixed using a magnetic stirrer until the complete homogenisation of the solution. Then 2 g of 1-ethyl-3-(3-dimethylaminopropyl)carbodiimide (WSC) are added to the polymer solution, and the mixture left stirring for 1 hour. To the mixture thus obtained is then finally added the catalyst, *i.e.* 1.6 ml of a 1% by weight solution of citric acid. The solution has been left stirring for a further 5 minutes, so that the catalyst may be homogeneously mixed.

Once the stirring is stopped, the formation of the gel is awaited. After 24 hours the solution has gelified, and the gel obtained has been placed in abundant distilled water, in order to eliminate any impurities and unreacted compounds. Changing the distilled water every 24 hours, the gel reached maximum reswelling after 5 days.

In order to be able to subsequently evaluate the efficacy of the material under test, in terms of absorbent capacity, it is necessary to then proceed with the drying of the gel, once the latter has been prepared and purified.

The gel has then been dried in acetone: a progressive reduction in volume is observed, until reaching a state of equilibrium, corresponding to a concentration of acetone-water mixture, formed following the release of the water from the sample, which contracts, of approx. 36% in acetone. At this point, the acetone-water mixture is removed and replaced with fresh pure acetone. The process has been repeated until the sample has completely eliminated all the water retained within, becoming a white, vitreous powder, on the bottom of the container. The powder has then been placed in an oven at 40°C for several minutes, so as to remove residual traces of acetone.

The xerogel (gel in the dry state) thus obtained has been labelled gel A.

Preparation of gel B

The polymer solution has been prepared by adding 0.9 g of carboxymethylcellulose sodium salt (CMCNa) and 0.3 g of hydroxyethylcellulose (HEC) to 40 ml of distilled water. The mixture has been left stirring, using a magnetic stirrer, until the complete homogenisation of the solution. Then 2 g of 1-ethyl-3-(3-dimethylaminopropyl)carbodiimide (WSC) are added to the polymer solution, and the mixture left stirring for 1 hour. To the mixture thus obtained has been finally added 1.6 ml of a 1% by weight citric acid solution, as catalyst. The solution has been left stirring for a further 5 minutes, so that the catalyst may be homogeneously mixed.

Once the stirring is stopped, the formation of the gel is awaited. After 24 hours the solution no longer flows, and the gel obtained has been placed in abundant distilled water, in order to eliminate any impurities and unreacted precursors. Changing the distilled water every 24 hours, the gel reached maximum reswelling after 5 days. At this point, the purified gel has been dried in acetone: a progressive reduction in volume is observed, until reaching a state of equilibrium, corresponding to a concentration of acetone-water mixture, formed following the release of the water from the sample, which contracts, of approx. 36% in acetone. At this point, the acetone-water mixture is removed and replaced with fresh pure acetone. The process has been repeated until the sample has completely eliminated all the water retained within, becoming a white, vitreous powder, on the bottom of the container. The powder has then been placed in an oven at 40°C for several minutes, so as to remove residual traces of acetone.

The xerogel thus obtained has been labelled gel B.

Preparation of gel C

The polymer solution has been prepared by adding 1 g of carboxymethylcellulose sodium salt (CMCNa) and 1 g of hydroxyethylcellulose (HEC) to 40 ml of distilled water. The preparation has been mixed using a magnetic stirrer until the complete homogenisation of the solution. Then 2 grams of 1-ethyl-3-(3-dimethylaminopropyl)carbodiimide (WSC) are added to the polymer solution, and the mixture left stirring for 1 hour. To the mixture thus obtained has been finally added 1.6 ml of a 1% by weight citric acid solution, as catalyst. The solution has been left stirring for a further 5 minutes, so that the catalyst may be homogeneously mixed.

Once the stirring is stopped, the formation of the gel is awaited. After 24 hours the solution is completely gelified, and the gel obtained has been placed in abundant distilled water, in order to eliminate any impurities and unreacted compounds. Changing the distilled water every 24 hours, the gel reached maximum reswelling after 5 days. At this point, the purified gel has been dried in acetone: a progressive reduction in volume is observed, until reaching a state of equilibrium, corresponding to a concentration of acetone-water mixture, formed following the release of the water from the sample, which contracts, of approx. 36% in acetone. At this point, the acetone-water mixture is removed and replaced with fresh pure acetone. The process has been repeated until the sample has completely eliminated all the water retained within, becoming a white, vitreous powder, on the bottom of the container. The powder has then been placed in an oven at 40°C for several minutes, so as to remove residual traces of acetone.

The xerogel thus obtained has been labelled gel C.

Absorption measurements

In order to test the absorption capacity of hydrogels A, B and C, these have been subjected to absorption measurements in distilled water. The absorption measurements performed essentially consist of placing the dry sample, obtained at the end of the drying process, in distilled water, so that it reswells until reaching equilibrium conditions.

The absorption capacity of the gel is assessed on the basis of its swelling ratio (SR), *i.e.* based on the ratio of the weight of the swollen gel to the weight of the dry gel.

In order to minimise the influence of experimental errors, it is preferable to perform each test on three samples of each gel, and then consider the mean value of the three as the effective value.

Three dry samples have been taken from.each of the three types of gel under test, each having different weights and dimensions from the other. After having recorded the weights, the samples have been swollen in abundant quantities of distilled water at room temperature. Upon reaching equilibrium after 24 hours, the samples have been weighed once more in order to determine the *swelling* ratio.

Mechanical measurements

The mechanical properties of the gels in the swollen states have been evaluated in terms of their shear elasticity modulus G, determined both by means of uniaxial compression testing, following the standard rubber elasticity theory, and by means of dynamic-mechanical measurements.

In order to perform both types of tests, the gels in question have been crosslinked in the form of thin disks, 1-2 mm thick for the compression tests and 7-8 mm thick for the dynamic-mechanical tests, as will be explained below.

All tests have been performed at 25 °C using the rheometer in a parallel plate configuration. Furthermore, the measurements have been repeated five times for each type of gel so as to reduce the uncertainty deriving from the experimental measurements.

Uniaxial compression tests

The thin swollen gel disks, 1-2 mm thick, have been carefully positioned between the parallel plates of the instrument.

Since in its swollen state, the gel tends to expel part of the water when subjected to compression stress, it is important that the disks are thin: Indeed, this way, the water, which would be inclined to leave the polymer network, may only be expulsed through the slender lateral surface of the gel, since the upper and lower surfaces are in contact with the rheometer plates; hence the phenomenon may be neglected.

After having adjusted the initial gap between the plates of the instrument in relation to the sample thickness, the measurement has been performed, imposing a constant velocity onto the upper plate, equal to 0.005 mm/s. During testing, the trend of the normal force, as a function of the gap between the plates, has been recorded. From the rubber elasticity theory, it is possible to calculate the shear modulus G from a uniaxial compression test, according to the following equation [8]:

$$\sigma = G\left(\alpha - \frac{1}{\alpha^2}\right)$$

wherein $\sigma$ is the uniaxial compression stress, and $\alpha = L/L_i$ is the deformation ratio, or rather the ratio between L, the thickness of the sample subjected to compression, and $L_i$, the initial thickness of the sample itself. By plotting a graph of $\sigma$ as a function of $\alpha = L/L_i$, a straight line is thus obtained, the slope of which represents G.

Values for $\alpha = L/L_i$ and $\sigma$ have hence been calculated for each individual test, the latter as the ratio between normal force and sample cross-section, and the relevant results have been plotted on a graph.

Dynamic-mechanical tests

In the dynamic-mechanical tests, the deformation of flow applied by the rheometer upper plate should cause the gel to slip between the plates, if the surfaces of the plates themselves were not appropriately modified.

Slippage has been avoided by the application of a small honeycomb shaped disk, 3 millimetres thick, to both plates using dual-sided adhesive tape. When compressed between the plates, the 7-8 mm thick gel disks, used for the dynamic-mechanical tests, have a part of their thickness penetrated by the honeycomb structure, from both above and below, so that the gel is well fixed for being subjected to torsional deformation.

Prior to proceeding with the dynamic-mechanical tests, a test has been performed in *strain-sweep* mode, which allows recording values for the G' modulus and G" modulus with varying deformation, in order to identify the material's regions of linear viscoelasticity, and hence the deformation value to be applied in the subsequent dynamic-mechanical tests.

The measurements have been performed at a deformation equal to 0.02 with frequency varying between 0.1 and 100 $s^{-1}$.

The results have been recorded in terms of storage modulus G', loss modulus G" and loss factor tgδ (G"/G').

Results
___

The results of the distilled water absorption measurements for the various types of hydrogel under test are reported in table I. It may be observed that the swelling ratio is influenced by the initial concentration of polymer in the starting solution, and, where such values are equal, by the CMCNa to HEC weight ratio, with CMCNa being the polyelectrolyte species.

Table I: absorption equilibrium tests in distilled water

|  | Swelling ratio* |
|---|---|
| Gel A | 424 |
| Gel B | 516 |
| Gel C | 188 |
| * *Swelling ratio* = (g swollen gel/g dry gel) | |

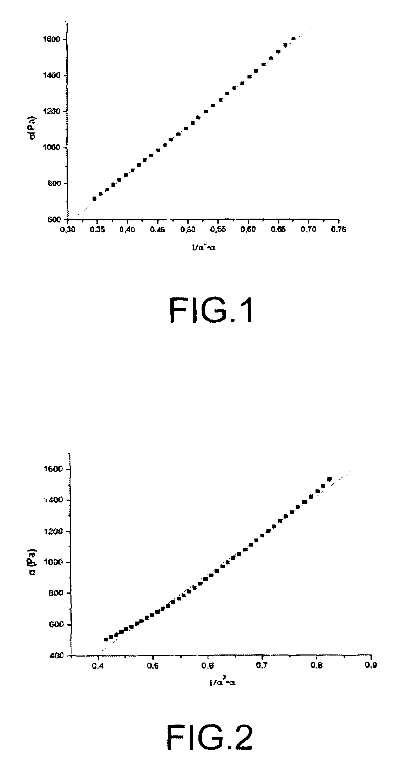

Figures 1 and 2 show the results obtained from the uniaxial compression tests for samples of gels A and C respectively.

The G modulus thus calculated for gel A is equal to 2500 Pa, while gel C has a slightly higher modulus, equal to 3000 Pa.

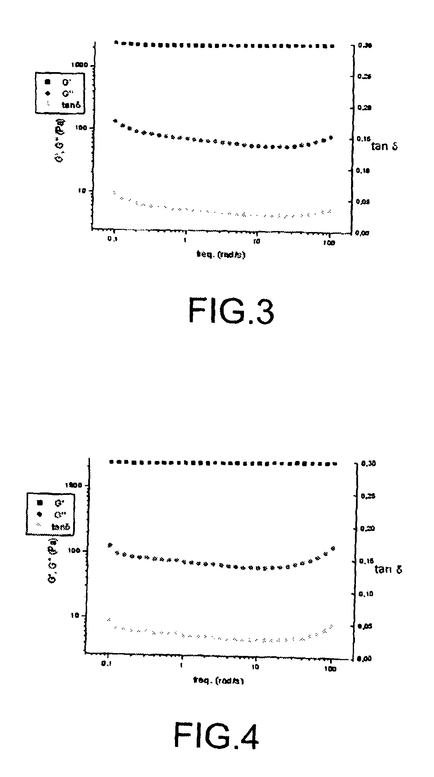

Figures 3 and 4 show the results obtained from dynamic-mechanical tests for the same samples, A and C respectively. For both gels, the G' modulus hardly varies with frequency, and is only slightly higher for gel C, which has a higher polymer concentration: G' is indeed equal to $2.2 \times 10^3$ Pa for gel A and $2.5 \times 10^3$ Pa for gel C. Furthermore, for both samples, the G" modulus varies more significantly with frequency, with its value fluctuating around $10^2$ Pa.

Bibliography
___

[1] Anbergen U, Opperman W, Polymer, 31, 1854 (1990).
[2] Esposito F et al., J. Appl. Polym. Sci., 60, 2403 (1996).
[3] Denn WL, Ferguson GN, US 3,589,364, 1971
[4] Sachetto JP et al., ES 484964, 1978
[5] Choi YS et al., Biomaterials, 20, 409 (1999)
[6] Nakajima N, Ikada Y, Bioconjugate Chem., 6, 123 (1995)
[7] Burns JW et al., US 5,017,229, 1991
[8] Flory P.J., Principles of Polymer Chemistry, Ithaca, NY: Cornell University Press, 1953

**Claims**

1. A method for the preparation of a superabsorbent polymer hydrogel, comprising the following steps:

   (i) crosslinking an aqueous solution of carboxymethylcellulose sodium salt (CMCNa) and hydroxyethylcellulose (HEC) with carbodiimide as a crosslinking agent and in the presence of an acid catalyst, the overall concentration of carboxymethylcellulose sodium salt and hydroxyethylcellulose in said aqueous solution being at least 3% by weight with reference to the weight of water, and the concentration of carbodiimide in said aqueous solution being at least 5% by weight with reference to the weight of water;
   (ii) washing the gel obtained at least once by swelling in a polar organic solvent; and
   (iii) drying the gel by phase inversion in a non-solvent for the cellulose.

2. The method according to claim 1, wherein the pH of said aqueous solution is comprised of between 3.5 and 4.5.

3. The method according to claims 1 or 2, wherein the carboxymethylcellulose sodium salt and the hydroxyethylcellulose are crosslinked in the presence of a polyalkylene-glycol as a molecular spacer.

4. The method according to claim 3, wherein said polyalkylene-glycol is polyethyleneglycol with a molecular weight comprised of between 800 and 1,000,000.

5. The method according to any of claims 1 to 4, wherein the carboxymethylcellulose sodium salt to hydroxyethylcellulose weight ratio in said aqueous solution is comprised of between 0/1 and 5/1, preferably between 1/1 and 3/1.

6. The method according to any of claims 1 to 5, wherein the carbodiimide is 1-ethyl-3-(-3-dimethylaminopropyl) carbodiimide (WSC).

7. The method according to any of claims 1 to 6, wherein the polar organic solvent is methanol or water, preferably distilled water.

8. The method according to any of claims 1 to 7, wherein the gel is washed with water prior to being dried.

9. The method according to any of claims 1 to 8, wherein the non-solvent for cellulose is acetone.

10. The method according to any of claims 1 to 9, wherein the acid catalyst is an aqueous solution of citric acid.

11. A superabsorbent polymer hydrogel obtainable by the method according to any of claims 1 to 10.

12. The use of a superabsorbent polymer hydrogel according to claim 11, as an absorbent material in products capable of absorbing water and/or aqueous solutions and/or capable of swelling when brought into contact with water or aqueous solutions, particularly dietary supplements, water and/or nutrients and/or phytopharmaceuticals controlled release devices for use in agriculture, absorbent products for personal hygiene, toys and gadgets adapted to altering their size significantly when brought into contact with water or aqueous solutions, biomedical devices.

13. A product comprising, as an absorbent material, a polymer hydrogel according to claim 11, said product being selected from the group consisting of absorbent products for personal hygiene, dietary supplements, water and/or nutrients and/or phytopharmaceuticals controlled release devices particularly for use in agriculture, toys or gadgets adapted to altering their size significantly when brought into contact with water or aqueous solutions, biomedical devices, particularly absorbent dressings.

**Patentansprüche**

1. Verfahren für die Herstellung eines superabsorbierenden polymeren Hydrogels, welches die folgenden Schritte umfasst:

(i) Vernetzen einer wässerigen Lösung aus Carboxymethylcellulose-Natriumsalz (CMCNa) und Hydroxyethylcellulose (HEC) mit Carbodiimid als Vernetzungsmittel und in Anwesenheit eines Säurekatalysators, wobei die Gesamtkonzentration von Carboxymethylcellulose-Natriumsalz und Hydroxyethylcellulose in besagter wässeriger Lösung mindestens 3 Gew.-% in Bezug auf das Gewicht von Wasser ist und die Konzentration an Carbodiimid in besagter wässeriger Lösung mindestens 5 Gew.-% in Bezug auf das Gewicht von Wasser ist;
(ii) Waschen des erhaltenen Gels mindestens einmal durch Quellen in einem polaren organischen Lösungsmittel; und
(iii) Trocknen des Gels durch Phaseninversion in einem Nichtlösungsmittel für die Cellulose.

2. Verfahren gemäß Anspruch 1, wobei der pH der wässerigen Lösung zwischen 3,5 und 4,5 umfasst ist.

3. Verfahren gemäß Ansprüchen 1 oder 2, worin das Carboxymethylcellulose-Natriumsalz und die Hydroxyethylcellulose in Anwesenheit eines Polyalkylenglycols als molekularer Abstandhalter vernetzt werden.

4. Verfahren gemäß Anspruch 3, wobei besagtes Polyalkylenglycol Polyethylenglycol mit einer Molekülmasse, umfasst von zwischen 800 und 1000000 ist.

5. Verfahren gemäß einem von Ansprüchen 1 bis 4, wobei das Gewichtsverhältnis von Carboxymethylcellulose-Natriumsalz zu Hydroxyethylcellulose in besagter wässeriger Lösung zwischen 0/1 und 5/1, vorzugsweise zwischen 1/1 und 3/1 umfasst ist.

6. Verfahren gemäß einem von Ansprüchen 1 bis 5, wobei das Carbodiimid 1-Ethyl-3-(-3-dimethylaminopropyl)carbodiimid (WSC) ist.

7. Verfahren gemäß einem von Ansprüchen 1 bis 6, wobei das polare organische Lösungsmittel Methanol oder Wasser, vorzugsweise destilliertes Wasser ist.

8. Verfahren gemäß einem von Ansprüchen 1 bis 7, wobei das Gel mit Wasser gewaschen wird, bevor es getrocknet wird.

9. Verfahren gemäß einem von Ansprüchen 1 bis 8, wobei das Nichtlösungsmittel für Cellulose Aceton ist.

10. Verfahren gemäß einem von Ansprüchen 1 bis 9, wobei der Säurekatalysator eine wässerige Lösung aus Zitronensäure ist.

11. Superabsorbierendes polymeres Hydrogel, welches durch das Verfahren gemäß einem von Ansprüchen 1 bis 10 erhältlich ist.

12. Verwendung eines superabsorbierenden polymeren Hydrogels gemäß Anspruch 11 als absorbierendes Material in Produkten, welche imstande sind, Wasser und/oder wässerige Lösungen zu absorbieren, und/oder quellfähig sind, wenn sie mit Wasser oder wässerigen Lösungen in Kontakt gebracht werden, insbesondere Nahrungsergänzungsmitteln, Vorrichtungen zur kontrollierten Freigabe von Wasser und/oder Nährstoffen und/oder Phytopharmaka zur Verwendung in der Landwirtschaft, absorbierenden Produkten für Körperpflege, Spielzeugen und Vorrichtungen, welche so angepasst sind, dass sie ihre Größe signifikant verändern, wenn sie mit Wasser oder wässerigen Lösungen in Kontakt gebracht werden, biomedizinischen Vorrichtungen.

13. Produkt, welches als absorbierendes Material ein polymeres Hydrogel gemäß Anspruch 11 umfasst, wobei besagtes Produkt ausgewählt ist aus der Gruppe bestehend aus absorbierenden Produkten für Körperpflege, Nahrungsergänzungsmitteln, Vorrichtungen zur kontrollierten Freigabe von Wasser und/oder Nährstoffen und/ oder Phytopharmaka insbesondere zur Verwendung in der Landwirtschaft, Spielzeugen oder Vorrichtungen, welche so angepasst sind, dass sie ihre Größe signifikant verändern, wenn sie mit Wasser oder wässerigen Lösungen in Kontakt gebracht werden, biomedizinischen Vorrichtungen, insbesondere absorbierenden Verbandstoffen.

**Revendications**

1. Procédé pour la préparation d'un hydrogel polymère superabsorbant, comprenant les étapes suivantes consistant à :

   (i) réticuler une solution aqueuse de sel de carboxyméthylcellulose sodique (CMCNa) et d'hydroxy-éthylcellulose (HEC) avec du carbodiimide comme agent de réticulation et en présence d'un catalyseur acide, la concentration globale du sel de carboxyméthylcellulose sodique et d'hydroxyéthylcellulose dans ladite solution aqueuse étant d'au moins 3 % en poids en référence au poids de l'eau, et la concentration de carbodiimide dans ladite solution aqueuse étant d'au moins 5 % en poids en référence au poids de l'eau ;
   (ii) laver le gel obtenu au moins une fois en le faisant gonfler dans un solvant organique polaire ; et
   (iii) sécher le gel par inversion de phase dans un non-solvant pour la cellulose.

2. Procédé selon la revendication 1, dans lequel le pH de ladite solution aqueuse est compris entre 3,5 et 4,5.

3. Procédé selon les revendications 1 ou 2, dans lequel le sel de carboxyméthylcellulose sodique et l'hydroéthylcellulose sont réticulés en présence d'un polyalkylène glycol en tant qu'espaceur moléculaire.

4. Procédé selon la revendication 3, dans lequel ledit polyalkylène glycol est du polyéthylène-glycol ayant une masse moléculaire comprise entre 800 et 1 000 000.

5. Procédé selon l'une des revendications 1 à 4, dans lequel le rapport en poids du sel de carboxyméthylcellulose sodique sur l'hydroxyéthyl-cellulose dans ladite solution aqueuse est compris entre 0/1 et 5/1, de préférence entre 1/1 et 3/1.

6. Procédé selon l'une des revendications 1 à 5, dans lequel le carbodiimide est du 1-éthyl-3-(-3-diméthylaminopropyl)carbodiimide (WSC).

7. Procédé selon l'une des revendications 1 à 6, dans lequel le solvant organique polaire est du méthanol ou de l'eau, de préférence, de l'eau distillée.

8. Procédé selon l'une des revendications 1 à 7, dans lequel le gel est lavé avec de l'eau avant d'être séché.

9. Procédé selon l'une des revendications 1 à 8, dans lequel le non-solvant pour la cellulose est de l'acétone.

10. Procédé selon l'une des revendications 1 à 9, dans lequel le catalyseur acide est une solution aqueuse d'acide citrique.

11. Hydrogel polymère superabsorbant pouvant être obtenu grâce au procédé selon l'une quelconque des revendications 1 à 10.

12. Utilisation d'un hydrogel polymère superabsorbant selon la revendication 11, en tant que matériau absorbant dans des produits capables d'absorber l'eau et/ou des solutions aqueuses et/ou capables de gonfler lorsqu'ils sont mis en contact avec de l'eau ou des solutions aqueuses, en particulier, des compléments alimentaires, des dispositifs à libération contrôlée d'eau et/ou de nutriments et/ou de produits phytopharmaceutiques destinés à être utilisés dans l'agriculture, des produits absorbants pour l'hygiène personnelle, des jouets et gadgets conçus pour que leur taille varie sensiblement lorsqu'ils sont mis en contact avec de l'eau ou des solutions aqueuses, des dispositifs biomédicaux.

13. Produit comprenant, en tant que matière absorbante, un hydrogel polymère selon la revendication 11, ledit produit étant choisi dans le groupe comprenant les produits absorbants pour l'hygiène personnelle, les compléments alimentaires, les dispositifs à libération contrôlée d'eau et/ou de nutriments et/ou de produits phytopharmaceutiques destinés en particulier à être utilisés dans l'agriculture, les jouets et gadgets conçus pour que leur taille varie sensiblement lorsqu'ils sont mis en contact avec de l'eau ou des solutions aqueuses, les dispositifs biomédicaux, en particulier, les pansements absorbants.

FIG.1

FIG.2

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3589364 A, Denn WL, Ferguson GN
- ES 484964, Sachetto JP
- US 5017229 A, Burns JW

### Non-patent literature cited in the description

- **Anbergen U ; Opperman W.** *Polymer,* 1990, vol. 31, 1854
- **Esposito F et al.** *J. Appl. Polym. Sci.,* 1996, vol. 60, 2403
- **Choi YS et al.** *Biomaterials,* 1999, vol. 20, 409
- **Nakajima N ; Ikada Y.** *Bioconjugate Chem.,* 1995, vol. 6, 123
- **Flory P.J.** Principles of Polymer Chemistry. Cornell University Press, 1953